# DEMANDE DE BREVET EUROPEEN

(11) **EP 3 296 153 A1**
(43) Date de publication de la demande: **21.03.2018**
(21) Numéro de dépôt: 17188723.5
(22) Date de dépôt: 31.08.2017
(51) Int. Cl.: B60N 3/00, F16M 11/10, A47B 21/007

(54) **TABLE COMPORTANT UN ÉCRAN TACTILE PIVOTANT EN HAUT D'UN PIED ET DESTINÉE À ÉQUIPER UN MOYEN DE TRANSPORT**

(30) Priorité: 02.09.2016 FR 1658162
(71) Demandeur: Kara Technology, 49480 Verrières-en-Anjou (FR)
(72) Inventeur: BIGNONET, Ivain, 49124 St Barthelemy D'Anjou (FR); MARTIN, Cedric, 49610 Murs-Erigne (FR)
(74) Mandataire: Vidon Brevets & Stratégie

(57) **Abrégé**

Dans un mode de réalisation particulier de l'invention, il est proposé une table constituée d'un écran rectangulaire affichant des menus et d'un pied, la table étant destinée à équiper des moyens de transport tels que : bateau, train, car. L'écran pivote d'une position verticale et une position horizontale à l'aide d'une charnière fixée en haut du pied, l'axe de rotation de la charnière étant décentré par rapport à l'axe longitudinal du pied. De cette manière, l'écran peut pivoter en haut de son pied et s'incliner selon un grand nombre de positions. La table comporte un système informatique intégré à l'écran, au moins un capteur d'inclinaison et une mémoire contenant des applications informatique accessibles par des icônes interactifs affichés sur l'écran rectangulaire sur une même page. La liste des icônes donnant l'accès aux applications présentée à un moment déterminé dépend de l'inclinaison de l'écran.

## Description

### 1. DOMAINE DE L'INVENTION

Le domaine de l'invention est celui des équipements destinés à être embarqués dans un moyen de transport, tel qu'un bateau, un train ou un car. L'invention concerne plus particulièrement une table constituée d'un écran de préférence tactile monté sur un pied, l'écran étant pivotant d'une position horizontale à une position verticale.

### 2. ARRIÈRE-PLAN TECHNOLOGIQUE

Les moyens de transport actuels tels que le bateau, le train ou le car, disposent de suffisamment de place pour placer du mobilier à l'intérieur de l'habitacle permettant aux voyageurs de s'asseoir autour d'une table. Compte tenu des mouvements du moyen de transport, il importe que la table soit bien fixée au sol, de façon qu'en cas de mouvements brusques lors d'un trajet, les passagers puissent s'y agripper. A condition de placer une protection sur le dessus, une vitre par exemple, un écran peut être incorporé à la table permettant ainsi de voir des contenus et d'interagir avec un système informatique. Il est connu par exemple, les jeux vidéo où les joueurs interagissent avec un écran tactile intégré à la table, qui est également utilisée pour poser des assiettes, couverts, verres ou plats. Le dessus de la table possède une vitre renforcée tout en permettant l'interaction tactile avec des icônes affichées.

Dans certains cas, il peut être utile de disposer verticalement la table/écran pour s'en servir comme d'un écran de télévision ou de cinéma. Cette disposition doit être compatible avec le fait que la table/écran doit être un moyen facile à agripper pour les passagers. Il importe donc de concevoir un moyen de rotation de la table/écran à la fois solide et facile à bloquer dans une position donnée. Dans le cas d'un bateau de type voilier dont le volume est généralement exigu, ce meuble peut également servir de partie de banquette ou de lit. Dans ce cas, le dessus de la table placée à l'horizontale doit pouvoir s'abaisser près du sol à la hauteur des sièges par exemple.

Tous ces exemples montrent la nécessité d'imaginer un nouveau concept de table/écran capable de pouvoir pivoter et de se régler en hauteur de façon à s'adapter à plusieurs utilisations. Ce meuble doit également disposer d'une assise et de moyens d'articulations suffisamment solide pour résister à des mouvements de passagers venant s'agripper à lui lors d'un trajet.

### 3. EXPOSÉ DE L'INVENTION

Dans un mode de réalisation particulier de l'invention, il est proposé une table constituée d'un écran rectangulaire affichant des menus et d'un pied, la table étant destinée à équiper des moyens de transport tels que : bateau, train, car. L'écran pivote d'une position verticale et une position horizontale à l'aide d'une charnière fixée en haut du pied, et l'axe de rotation de la charnière est décentré par rapport à l'axe longitudinal du pied.

De cette manière, la table peut pivoter en haut de son pied et s'incliner selon un grand nombre de positions.

Selon un premier mode de réalisation, l'axe de rotation est monté sur l'écran rectangulaire à une position plus proche du coté le plus bas lorsque ledit écran se trouve dans sa position verticale. De cette manière, le centre de la table positionné horizontalement vient à la verticale de l'axe longitudinal au centre du pied.

Selon un autre mode de réalisation, le moyen de friction progressif est constitué d'une surface ayant une forme ellipsoïdale dont le centre se confond avec l'axe de la charnière, un rouleau non rotatif et capable de se mouvoir en translation vient en contact avec la dite surface, le rouleau étant contraint dans une position prédéterminée de son déplacement en translation par un élément ressort, la distance entre le rouleau et l'axe de la charnière étant maximale lorsque la table est en position verticale, cette distance étant minimale lorsque la table est en position horizontale. De cette manière, la force de résistance au pivotement varie en fonction de l'angle de basculement de la table.

Selon un autre mode de réalisation, le sommet du pied présente une forme inclinée comportant une surélévation en périphérie, la charnière étant placée au niveau de ladite surélévation, de façon à incliner la table au-delà de l'horizontale dans le sens opposé permettant de le disposer verticalement. De cette manière, la table peut basculer selon une rotation de plus grande amplitude.

Selon un autre mode de réalisation, en position horizontale, l'écran est tenu par une béquille disposé de l'autre coté du pied que celui de la charnière. De cette manière, la position horizontale de la table est plus stable.

Selon un autre mode de réalisation, la table comporte un système informatique intégré à l'écran et comportant au moins un capteur d'inclinaison et une mémoire contenant des applications informatique accessibles par des icônes interactifs, la liste des icônes donnant l'accès aux applications présentée à un moment déterminé dépendant de l'inclinaison de l'écran. De cette manière, le programme intégré à la table peut déterminer sa position de basculement.

Selon un autre mode de réalisation, lorsque l'écran est détecté en position horizontale, les icônes affichées sont orientées selon plusieurs directions, de préférence aléatoirement. De cette manière, les menus peuvent être lus par des utilisateurs placés autour de la table lorsque celle-ci est horizontale.

Selon un autre mode de réalisation, lorsque l'écran est détecté en position verticale, les icônes affichées à la mise sous tension donnent accès à des contenus multimédia destinés à être reproduits par ledit écran. De cette manière, l'accès aux contenus multimédias est plus rapide, lorsque la table est en position verticale qui est sa position dédiée à la visualisation de ce type de contenus.

### 4. LISTE DES FIGURES

D'autres caractéristiques et avantages de l'invention apparaîtront à la lecture de la description suivante, donnée à titre d'exemple indicatif et non limitatif, et des dessins annexés, dans lesquels :
- la figure 1 présente un exemple de réalisation d'une table sous la forme de quatre images montrant des inclinaisons différentes de l'écran,
- la figure 2 montre l'articulation entre l'écran et le pied, lorsque l'écran est en position horizontale, selon un exemple de réalisation,
- la figure 3 montre une articulation entre l'écran et le pied selon une vue éclatée montrant les principaux éléments de la charnière utilisée selon un exemple préféré de réalisation,
- la figure 4 présente des images montrant un exemple d'une pièce surmontant le pied de la table,
- la figure 5 présente un exemple d'un mécanisme de freinage et de blocage de la rotation de l'écran sur la pièce surmontant le pied de la table,
- la figure 6 présente un exemple de disposition des éléments de la charnière lorsque l'écran est en position horizontale,
- la figure 7 présente un exemple de disposition des éléments de la charnière lorsque l'écran est en position verticale,
- la figure 8 présente en perspective la charnière vue de derrière et en oblique, lorsque l'écran est en position verticale,
- la figure 9 présente une variante de réalisation où l'écran en position horizontale est bloqué en rotation par une béquille,
- la figure 10 présente un perfectionnement consistant à placer l'écran dans une position de pupitre inversé,
- la figure 11 présente un exemple de réalisation où le pied est cylindrique et surmonté d'un élément pivotant.

### 5. DESCRIPTION DÉTAILLÉE

Sur toutes les figures du présent document, les éléments identiques sont désignés par une même référence numérique.

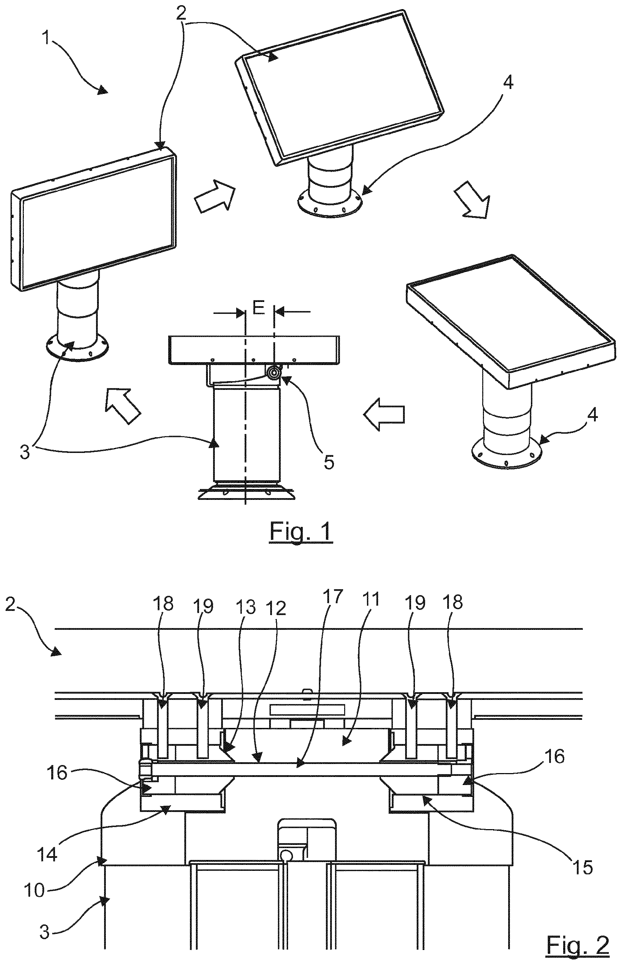

On présente maintenant, en relation avec la **Fig. 1**, des représentations d'un exemple de réalisation d'une table destinée à équiper des moyens de transports tels que des bateaux, des trains ou des cars. La table 1 comporte un écran rectangulaire 2 et un pied 3 comportant une embase 4 fixée au plancher du moyen de transport, par des vis et des écrous par exemple. A l'aide d'une charnière 5, l'écran 2 pivote d'au moins 90° entre une position verticale et une position horizontale, et peut prendre une position en oblique. La **Fig. 1** présente sous la forme de quatre images diverses positions où l'écran est successivement vertical, en oblique et horizontal.

Selon un perfectionnement, le pied 3 possède une section cylindrique et est constitué de plusieurs tubes emboités formant un élément télescopique. De cette manière, l'écran est réglable en hauteur dans n'importe quelle position. L'image de la **Fig. 1** présentant la table horizontale et de profil montre le pied dans sa plus faible hauteur, et l'image à droite montre l'écran incliné et en position haute. Selon un perfectionnement, la montée et la descente du pied télescopique sont motorisées, en utilisant une crémaillère à l'intérieur du pied et un moteur électrique. Selon une variante de réalisation, le pied possède une section carrée et garde sa fonction télescopique.

Comme on peut déjà le voir sur la **Fig. 1**, l'axe de rotation de la charnière est décentré par rapport à l'axe longitudinal au centre du pied, et se situe approximativement à la verticale de sa surface périphérique. Selon un mode préféré de réalisation, le centre de l'écran positionné horizontalement vient à la verticale de l'axe longitudinal au centre du pied. Ceci a pour conséquence que la partie mobile de la charnière 5 n'est pas fixée sous le milieu de l'écran, mais se situe à une position plus proche du coté le plus bas lorsque ledit écran se trouve dans sa position verticale, comme le montre l'image de la **Fig. 1** montrant la table horizontale et de profil, l'axe longitudinal au centre du pied et l'axe normale au centre de l'écran se confondant et étant représenté par une ligne discontinue. La valeur du décentrage est notée E sur cette image. Selon l'exemple de réalisation, pour un pied de 30 centimètre de diamètre la valeur du décentrage est de 27 centimètres.

Dans l'hypothèse où le poids de l'écran est uniformément réparti sous sa surface, le fait de décentrer la charnière mobile engendre une répartition non égale du poids de chaque coté de la charnière et donc une tendance pour l'écran à basculer à l'horizontale. Si ce mouvement naturel n'est pas retenu, la chute peut être brutale et endommager l'électronique de l'écran. Pour éviter cela la charnière est dotée d'un moyen de friction progressif dont le couple résistant augmente lorsque l'écran passe de la position verticale à la position horizontale. Ce moyen de friction et la charnière en général vont maintenant être décrites par les figures suivantes.

La **Fig. 2** montre l'articulation entre l'écran 2 et le pied 3, lorsque l'écran est en position horizontale. Le pied est surmonté d'une pièce haute 10 de forme circulaire. La pièce haute possède d'un coté une surélévation 11 traversée par un alésage cylindrique 12 qui rejoint en son milieu un rayon de la pièce haute et le coupe perpendiculairement, la pièce haute possédant une symétrie axiale de chaque coté de ce rayon de la pièce haute. L'alésage se prolonge horizontalement dans la surélévation de la pièce haute 10 et débouche aux deux extrémités par des chanfreins 13. La partie mobile de la charnière (c'est à dire celle qui est mécaniquement fixée à l'écran) encadre les flancs de la surélévation par deux formes cylindriques 14 contenant chacune deux flasques cylindriques au contact l'une de l'autre : deux flasques internes 15 et deux flasques externes 16. Les cotés des deux flasques internes 15 se faisant face possèdent une surface tronconique qui vient s'insérer dans les deux chanfreins 13 situés aux deux extrémités de l'alésage. Les deux flasques externes 16 débouchent de chaque coté de la partie mobile de la charnière. Les quatre flasques cylindriques sont traversées longitudinalement en leur milieu par un trou. Seule une flasque externe est taraudée, les surfaces des trous pratiqués dans les trois autres sont lisses.

Les deux parties de la charnière sont montées en faisant passer une vis 17 à travers les quatre flasques et dans l'alésage de la surélévation, cette vis s'insère jusqu'à atteindre la flasque externe filetée dans laquelle elle se visse. Les deux flasques externes 16 sont libres en translation et bloquées en rotation par des vis 18 se logeant dans la partie mobile de la charnière et s'insérant dans une gorge rectiligne s'étendant longitudinalement sur la surface de la flasque. Les deux flasques internes sont également libres en translation et bloquées en rotation par des vis 19 se logeant dans la partie mobile de la charnière et s'insérant dans une gorge rectiligne s'étendant longitudinalement sur la surface de la flasque. Lors du vissage, la vis 17 rapproche les deux flasques externes, comprimant ainsi les flasques internes sur les chanfreins 13. Du fait que les flasques 15 et 16 sont bloquées en rotation vis à vis de la partie mobile de la charnière, lors du basculement de l'écran, les surfaces en contact frottent contre les chanfreins et exercent une force de friction, ce qui génère en conséquence un couple résistant à la rotation de la charnière. La forme tronconique des chanfreins et du cotés des flasques 15 augmente les surfaces en contact et par conséquent le frottement.

En serrant plus ou moins la vis, il est possible de régler le couple résistant à la rotation pour que l'écran retombe doucement en position horizontale.

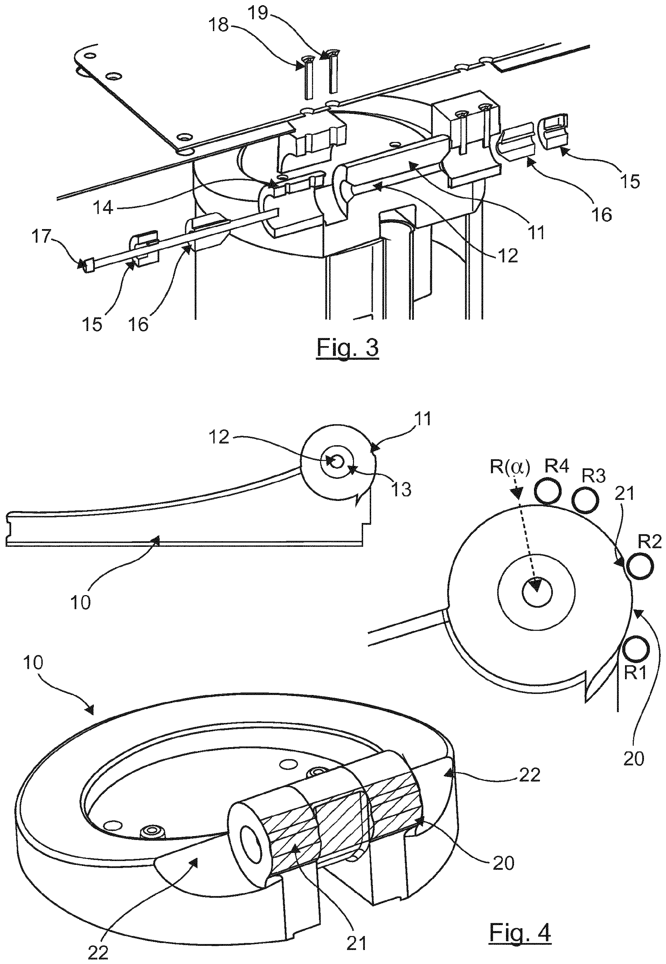

La **Fig. 3** montre l'articulation entre l'écran 2 et le pied 3 selon une vue éclatée montrant les principaux éléments de la charnière. Cette figure montre clairement la coopération de :
- la surélévation 11 traversée par l'alésage cylindrique 12,
- les formes cylindriques 14 de la partie mobile de la charnière,
- les flasques internes 15 et externes 16 insérées dans les formes cylindriques 14,
- la vis 17 traversant les flasques et l'alésage,
- les vis 18 et 19 bloquant en rotation les flasques.

Les images de la **Fig. 4** montre la forme générale de la pièce haute 10 de forme circulaire. Cette pièce est monobloc, et fabriquée par fonderie en aluminium de préférence, ou en acier inoxydable. La première image montre la pièce 10 orientée selon l'axe de l'alésage 12, on peut constater la hauteur de la surélévation par rapport au coté opposé. Cette surélévation permet de positionner l'écran en pupitre inversé en augmentant sa rotation au delà de 90°. Le chanfrein 13 à l'extrémité de l'alésage est clairement visible. La seconde image montre le détail de la surélévation et notamment sa forme arrondie autour de l'axe de l'alésage.

La surface cylindrique de la surélévation 11 est appelée « la piste ». Selon un perfectionnement, cette surface est excentrée par rapport à l'alésage et possède la forme d'une ellipse, le rayon de la piste mesuré par rapport à l'axe de l'alésage variant selon l'angle d'inclinaison, en augmentant sur une fenêtre d'angle donnée et diminuant sur la fenêtre complémentaire au cercle. Dans l'exemple de réalisation décrit, en partant d'un point situé en bas et à la périphérie de la pièce haute, en remontant et enfin en se rapprochant du centre de cette pièce, le rayon R(a) d'un point à la surface de la piste diminue. Pour une valeur d'angle prédéterminé, la piste présente une gorge cylindrique 21 de faible profondeur s'étendant parallèlement à l'alésage. La troisième image (celle du bas sur la Fig. 4) présente en perspective la pièce haute et sa surélévation cylindrique. Sur cette vue horizontale, on voit nettement des enlèvements de matière 22 pratiqués de chaque coté de la surélévation cylindrique. Ces enlèvements permettent la mise en place des formes cylindriques 14 de la partie mobile de la charnière. Sur cette image, la gorge cylindrique 21 est clairement visible en périphérie de la pièce haute.

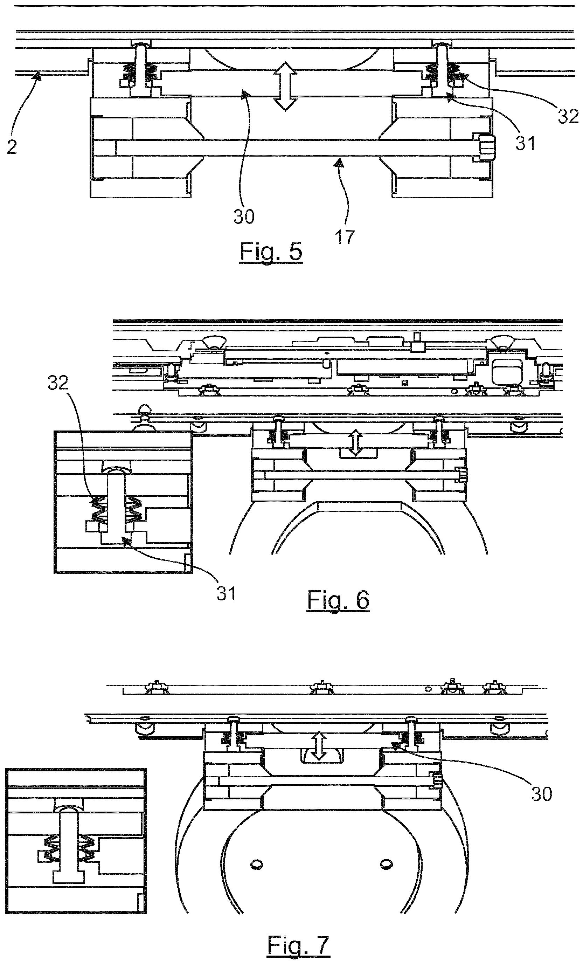

La **Fig. 5** présente un mécanisme de freinage et de blocage de la rotation de l'écran sur la pièce haute 10du pied, selon un exemple de réalisation. La surélévation 11 n'est pas représentée sur cette figure, permettant ainsi de rendre visible la vis 17. Un rouleau cylindrique 30, mobile en translation est positionné parallèlement à l'axe de la vis 17. Ce rouleau est solidaire de l'écran et des parties mobiles 14 de la charnière. Le rouleau 30 entre en contact avec la piste décrite dans la figure précédente et notamment la partie représentée par une zone hachurée dans la troisième image de la **Fig. 4****.** Les deux extrémités de ce rouleau comportent deux méplats traversés par un orifice de fixation. Des vis 31 traversent les méplats et viennent se fixer dans la partie basse des parties mobiles 14 de la charnière. Le rouleau se déplace en translation le long de la surface filetée des vis 31. Des éléments ressorts 32 (par exemple des rondelles Belleville) repoussent le rouleau 30 vers la tête des vis 31.

La **Fig. 4** montre le rouleau 30 selon quatre positions :
- Position R1 : le rouleau 30 est en position basse, l'écran est vertical, distance par rapport au centre : 27 millimètres.
- Position R2 : le rouleau 30 est dans la gorge 21, l'écran est en oblique à 45°, distance par rapport au centre : 26 millimètres de chaque coté de la gorge et 25 millimètres dans le fond de la gorge.
- Position R3 : le rouleau 30 est en position haute, l'écran est horizontal, distance par rapport au centre : 25 millimètres.
- Position R4 : le rouleau 30 est au maximum en hauteur, l'écran est penché en avant, en position de pupitre inversé, distance par rapport au centre : 25 millimètres.

Dans le mode préféré de réalisation, le rouleau 30 est monté sur la partie mobile de la charnière, c'est à dire qu'il est solidarisé à l'écran, et la forme ellipsoïdale est fixée au pied 3 de la table. Selon une variante, la forme ellipsoïdale est solidarisée à l'écran, et le rouleau 30 est fixé, quant à lui, au pied 3.

**La** **Fig.** 6 présente un exemple de disposition des éléments de la charnière lorsque l'écran est en position horizontale, l'écran 2 visible en haut de la figure, formant une table. Dans cette position le rouleau 30 se trouve sur la piste 20 en position R3, à une distance minimale du centre de l'alésage 12. Comme le montre le médaillon de la **Fig. 6**, les éléments ressorts 32 ne sont pas sollicités, et sont détendus au maximum. Le rouleau est donc peu repoussé par la piste et subit une contrainte faible. Dans cette position, il est facile pour l'utilisateur de manoeuvrer l'écran et de le relever.

**La** **Fig. 7** présente un exemple de disposition des éléments de la charnière lorsque l'écran est en position verticale, l'écran 2 visible en haut de la figure, est en position cinéma. Dans cette position, le rouleau 30 se trouve sur la piste 20 en position R1, à une distance maximale du centre de l'alésage 12. Le rouleau est fortement repoussé par la piste et subit une contrainte importante. Comme le montre le médaillon de la **Fig. 7**, les éléments ressorts 32 sont sollicités, et sont au maximum comprimés. Dans cette position, les forces de friction empêchent l'écran de bouger et donc de s'abaisser en position horizontale.

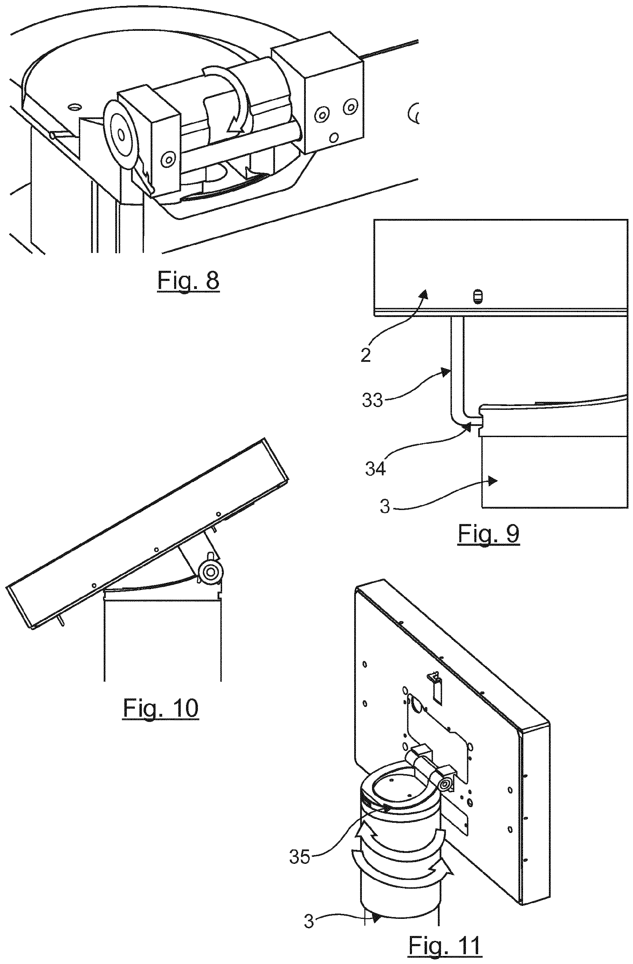

**La** **Fig. 8** présente en perspective la charnière vue de derrière et en oblique, dans une disposition où l'écran est disposé verticalement, en position cinéma. Une flèche présente le mouvement qui a permis de relever l'écran. On voit nettement le rouleau 30 qui vient de sortir de la gorge 21 et qui se situe maintenant en dessous.

La **Fig. 9** présente une variante de réalisation où l'écran en position horizontale est bloqué en rotation par une béquille 33. Cette béquille est repliable et doté d'un crochet 34 qui s'oriente vers le pied 3 lorsque l'écran est en position horizontale. De cette manière, l'écran est solidement maintenu en position horizontale en deux points opposés à la verticale de la périphérie du pied : par la charnière et par la béquille. Les utilisateurs peuvent exercés du poids dessus l'écran sans risque de le faire basculer.

La **Fig. 10** présente un perfectionnement consistant à placer l'écran pour constituer un pupitre inversé. Dans cette disposition, l'arrière de l'écran 2 vient buter sur la partie la moins élevée de la pièce haute 10 assurant un parfaite stabilité, et le rouleau se situe à la position R4 illustrée par la **Fig. 4****.**

La **Fig. 11** présente la variante préférée de réalisation où le pied 3 est cylindrique et surmonté d'un élément pivotant 35 permettant à l'écran de tourner autour d'un axe vertical. En complément de la charnière précédemment décrite, on peut ainsi constater que l'écran peut s'orienter dans toutes les directions. Un élément de blocage actionné par un levier permet de bloquer la rotation de l'élément pivotant dans une position déterminée.

Les éléments mécaniques décrits par l'ensemble des **Fig. 1** à **11** conviennent à tout type d'écran 2, quels que soient leurs technologie (LCD, plasma, LED, OLED ...) et quelles que soient leurs dimensions (largeur, hauteur, épaisseur, ...).

La table telle que décrite précédemment dans sa partie mécanique autorise de nombreuses utilisations et notamment :
- table de cuisine (position haute, écran horizontal et éteint)
- table de navigation (position haute, écran horizontal et allumé)
- cinéma (position haute, écran vertical et allumé)
- pupitre (position basse ou haute, écran incliné, écran allumé ou éteint)
- couchette (position basse, écran horizontal et éteint)

On remarque donc que l'utilisation de l'écran allumé n'est pas la même lorsque celui-ci est en position horizontale ou verticale. La table comporte un système informatique intégré à l'écran, au moins un capteur d'inclinaison et une mémoire contenant des applications informatique accessibles par des icônes interactifs affichés à l'écran rectangulaire 2.

Selon un perfectionnement, le logiciel exécuté par le système informatique reçoit du capteur la valeur de l'inclinaison de la table, contrôle les menus affichés sur l'écran en prenant en compte l'inclinaison de l'écran et présente des menus différents à la mise sous tension selon que l'écran est vertical, horizontal ou incliné. Pour détecter l'inclinaison, la carte électronique incorporée dans l'écran comporte un capteur d'inclinaison, un relais REED par exemple.

En position verticale et à la mise sous tension, l'écran affiche un menu dédié à la présentation de contenus multimédia, audio et/ou visuel, des films ou une liste de contenus audiovisuels avec texte pour réaliser des karaokés par exemple.

En position horizontale et à la mise sous tension, des menus plus spécifiques sont affichés, table de mixage, bureautique, emails, communication (chat, réseau sociaux...), surveillance vidéo, lecture.

En position inclinée et à la mise sous tension, l'écran affiche plus spécifiquement un menu dédié à la présentation de contenus de navigation, des cartes marines par exemple. Dans tous les cas, toutes les applications sont accessibles à l'écran, la détection de la position de l'écran fait uniquement varier les menus présentés à la mise sous tension, ou par défaut. Il est toujours possible en parcourant l'arborescence des menus d'accéder en fin de compte à l'application désirée.

L'écran détecte s'il se trouve en position pupitre ou pupitre inversé, et oriente le texte à 0° ou le tourne à 180° de façon que le bas des menus affichés se situe réellement vers le bas de l'écran. Selon une première variante de réalisation, lorsque l'écran est en position horizontale, les icônes affichées sont orientées selon plusieurs directions, de préférence aléatoirement. Selon une seconde variante de réalisation, la table comporte un moyen de détection de la présence d'un ou plusieurs utilisateur(s), qui se trouve(nt) par exemple à moins de 30 centimètres de la table. Un tel moyen peut être une caméra placée au-dessus de la table et dotée d'un champ large pour capter l'environnement de la table et une unité centrale traitant les images afin de détecter autour des présences humaines. Lorsque l'écran est détecté en position horizontale, le système informatique oriente les icônes affichées dans la direction du ou des utilisateurs. Si par exemple, trois utilisateurs sont autour de la table, les icônes sont aléatoirement orientés selon les trois directions définies par la position de ces utilisateurs. Si par la suite, un utilisateur n'est plus détecté, alors les directions des icônes affichées sont de nouveau calculées en fonction des directions vers lesquelles se situent les utilisateurs restants.

Selon une troisième variante de réalisation, le système informatique affiche des barres d'icônes à proximité des quatre cotés de la table rectangulaire, la direction de chaque barre étant parallèle à celle du coté. Les quatre barres d'icônes sont identiques, les icônes d'une même barre étant orientées vers l'extérieur de la table. Lorsqu'un utilisateur introduit une commande sur une icône, l'application correspondante occupant une zone déterminée de l'écran est orientée en direction de la barre ayant l'icône sélectionnée. De cette façon, plusieurs utilisateurs peuvent en même temps interagir avec la table en exécutant leurs propres applications qui apparaissent dans des zones spécifiques de l'écran dont le contenu visuel est orientée vers l'utilisateur qui l'utilise.

Si l'écran est tactile, il peut être utile dans certains cas de désactiver la fonction d'introduction de commande de façon tactile dans une position où l'écran est horizontal et que l'on peut poser des objets dessus. Dans ce cas, une icône et/ou un bouton situé à l'arrière peut activer et/ou inhiber la fonction d'introduction de commande par moyen tactile.

## Revendications

1. Table (1) constituée d'un écran rectangulaire (2) affichant des menus et d'un pied (3), la table étant destinée à équiper des moyens de transport tels que : bateau, train, car, l'écran pivotant d'une position verticale et une position horizontale à l'aide d'une charnière (5) fixée en haut du pied (3), l'axe de rotation de la charnière étant décentré par rapport à l'axe longitudinal du pied **caractérisé en ce que** ladite table comporte un système informatique intégré à l'écran, au moins un capteur d'inclinaison et une mémoire contenant des applications informatique accessibles par des icônes interactifs affichés sur l'écran rectangulaire (2) sur une même page, la liste des icônes donnant l'accès aux applications présentée à un moment déterminé dépendant de l'inclinaison de l'écran.

2. Table selon la revendication 1, **caractérisé en ce que** l'axe de rotation est monté sur l'écran rectangulaire (2) à une position plus proche du coté le plus bas lorsque ledit écran se trouve dans sa position verticale.

3. Table selon la revendication 2, **caractérisé en ce qu'**elle comporte un moyen de friction progressif appliquée à la charnière dont le couple résistant augmente lorsque l'écran passe de la position horizontale à la position verticale.

4. Table selon la revendication 3, **caractérisé en ce que** le moyen de friction progressif est constitué d'une surface ayant une forme ellipsoïdale dont le centre se confond avec l'axe de la charnière, un rouleau non rotatif et capable de se mouvoir en translation vient en contact avec la dite surface, le rouleau étant contraint dans une position prédéterminée de son déplacement en translation par un élément ressort, la distance entre le rouleau et l'axe de la charnière étant maximale lorsque l'écran est en position verticale, cette distance étant minimale lorsque l'écran est en position horizontale.

5. Table selon l'une quelconque des revendications précédentes, **caractérisé en ce que** le sommet du pied présente une forme inclinée comportant une surélévation en périphérie, la charnière étant placée au niveau de ladite surélévation, de façon à incliner l'écran au-delà de l'horizontale dans le sens opposé permettant de le disposer verticalement.

6. Table selon l'une quelconque des revendications précédentes, **caractérisé en ce qu'**en position horizontale, l'écran est tenu par une béquille disposé de l'autre coté du pied que celui de la charnière.

7. Table selon l'une quelconque des revendications, **caractérisé en ce que** lorsque l'écran est détecté en position horizontale, les icônes affichées sont orientées aléatoirement selon plusieurs directions.

8. Table selon l'une quelconque des revendications 1 à 6, **caractérisé en ce que** lorsque l'écran est détecté en position verticale, les icônes affichées à la mise sous tension donnent accès à des contenus multimédia destinés à être reproduits par ledit écran.

9. Table selon l'une quelconque des revendications précédentes, **caractérisé en ce que** la prise en compte de l'inclinaison pour déterminer la liste des icônes affichés à l'écran (2) n'intervient qu'à la mise sous tension du système informatique, une modification ultérieure de l'inclinaison ne modifiant pas l'affichage à l'écran.

10. Table selon l'une quelconque des revendications 1 à 6, **caractérisé en ce qu'**elle comporte un moyen de détection de la présence d'au moins un utilisateur à une distance de la table inférieure à une valeur déterminée et **en ce que**, lorsque l'écran est détecté en position horizontale, le système informatique oriente les icônes affichées dans l'au moins une direction de l'au moins un utilisateur.

11. Table selon la revendication 10, **caractérisé en ce que** le départ d'un utilisateur déclenche la réorientation des icônes affichées dans la direction des utilisateurs restants autour de la table.

12. Table selon l'une quelconque des revendications 1 à 6, **caractérisé en ce que** le système informatique affiche une pluralité de barres d'icônes identiques et orientées selon les cotés de la table, les icônes d'une même barre étant orientées vers l'extérieur de la table, la sélection d'une icône d'une barre déclenchant l'affichage de l'application associée dans une zone déterminée de l'écran, le contenu visuel occupant ladite zone déterminée étant orienté en direction de la barre ayant l'icône sélectionnée.

13. Table selon l'une quelconque des revendications précédentes, **caractérisé en ce que** l'écran est tactile, le système informatique désactivant la fonction d'introduction de commande tactile lorsque la table est mise en position horizontale.

14. Table selon la revendication 10, **caractérisé en ce que** la table dispose d'un bouton pour réactiver la fonction d'introduction de commande tactile lorsque la table est en position horizontale.
